# FASCICULE DE BREVET EUROPEEN

(11) **EP 2 591 957 B1**
(45) Date de publication et mention de la délivrance du brevet: **25.06.2014**
(21) Numéro de dépôt: 12189841.5
(22) Date de dépôt: 24.10.2012
(51) Int. Cl.: B60S 1/16, B60S 1/24, H02K 7/075

(54) **Système d'embiellage pour essuie-glace**
WISCHERARMGESTÄNGEANORDNUNG
Wiper arm linkage system

(30) Priorité: 09.11.2011 FR 1160181
(43) Date de publication de la demande: 15.05.2013
(73) Titulaire: Valeo Systèmes d'Essuyage, 78321 Le Mesnil Saint Denis (FR)
(72) Inventeur: Blanchet, Pierre, 86140 CLAIRVAUX (FR); Nicaud, Laurent, 86130 JAUNAY CLAN (FR); Requillard, Yann, 86100 CHATELLERAULT (FR); Servin, Alain, 86190 VILLIERS (FR)
(74) Mandataire: Léveillé, Christophe

(56) Documents cités:
- DE-A1- 3 247 421
- DE-A1- 4 143 158
- DE-A1- 4 404 359
- US-A- 2 486 238

## Description

L'invention concerne un système d'embiellage, en particulier pour essuie-glace de véhicule.

Les moteurs d'essuie-glace de véhicule automobile produisent un mouvement rotatif d'un arbre, qu'il convient de transformer en mouvement de balayage des balais des essuie-glaces.

À cette fin il est connu d'utiliser des mécanismes de bielles qui transforment le mouvement de rotation de l'arbre en sortie du moteur en mouvement rectiligne de tringles qui à leur tour mettent en mouvement les balais des essuie-glaces.

Les mécanismes de bielle, dits aussi systèmes d'embiellage, sont généralement contenus dans un boîtier, formé par une plaque de fermeture et d'un socle, afin de les protéger de l'environnement extérieur.

Il existe notamment deux différents mécanismes de systèmes d'embiellage, respectivement avec et sans engrenages.

Les mécanismes avec engrenages sont par exemple décrits dans le brevet DE 3247 421. Dans ces mécanismes, l'arbre met en mouvement une roue au moins partiellement crantée, en prise avec une portion crantée complémentaire d'une roue formant base d'un bras qui effectue alors un mouvement de balayage.

La bielle est articulée à un axe, de même que la roue crantée. Ces axes sont maintenus relativement l'un par rapport à l'autre par un balancier formé de deux demi-balanciers, qui sont des pièces métalliques planes percées de deux trous pour accueillir les axes, et de longueur adaptée à la mise en prise des engrenages.

Les mécanismes sans engrenages sont par exemple décrits dans le document DE 44 04 359. Ces mécanismes comportent eux aussi un arbre, mis en mouvement par le moteur. L'arbre est en prise avec un balancier, composé de deux demi-balanciers relativement plans, qui sont emboutis ensemble autour de l'arbre. Entre les demi-balanciers est placé un axe, sur lequel s'articule une bielle, qui met en mouvement les balais d'essuie-glace.

Les mécanismes sont relativement différents, ce qui se traduit par des dimensions différentes de l'un à l'autre. En conséquence, ces deux mécanismes, souvent proposés par les mêmes fournisseurs, requièrent des boîtiers différents. La présence de différents types de boîtiers conduit à une complication de la logistique nécessaire en amont, qui se traduit par un prix plus élevé du produit final.

Pour pallier les défauts mentionnés, l'invention propose un système d'embiellage pour la transformation d'un mouvement rotatif d'un arbre en mouvement de translation d'une bielle, comprenant un boîtier destiné à enfermer un système d'embiellage à engrenage, et un balancier formé par deux demi-balanciers en prise avec l'arbre, un axe au bout de balancier, la bielle étant articulée à l'axe, caractérisé en ce que le balancier comporte une entretoise disposée entre les demi-balanciers, l'écartement des demi-balanciers en appui contre l'entretoise correspondant à l'épaisseur du système d'embiellage à engrenages au moins autour de l'arbre de sorte que ledit boîtier forme un palier glissant par contact glissant pour chacun des deux demi-balanciers au moins autour de l'arbre.

En proposant un mécanisme sans engrenages aux dimensions adaptées à des boîtiers de mécanismes avec engrenages, l'invention permet aux fournisseurs proposant les deux types de mécanismes de simplifier la logistique d'approvisionnement puisque les deux types de mécanismes peuvent être indifféremment implémentés dans le même boîtier.

En outre, des économies d'échelle peuvent être réalisées à la production du boîtier puisqu'un seul modèle est requis, en plus grande quantité.

Le système peut en outre présenter l'une ou plusieurs des caractéristiques suivantes, prises seules ou en combinaison.

L'entretoise vient de matière avec au moins un des demi-balanciers.

L'entretoise est obtenue par emboutissage d'un col autour d'un perçage d'un demi-balancier destiné à accueillir l'arbre.

L'entretoise comporte deux demi-entretoises identiques, respectivement portées par un des deux demi-balanciers, lesdits demi-balanciers étant identiques.

L'entretoise comporte un anneau entourant l'arbre d'une épaisseur telle que ladite épaisseur additionnée de l'épaisseur des deux demi-balanciers est l'épaisseur d'un système d'embiellage à engrenages au moins autour de l'arbre.

L'anneau est un anneau métallique.

L'anneau est un anneau en plastique.

L'entretoise vient au moins partiellement de matière avec l'arbre.

L'invention a aussi pour objet le système d'essuie-glace de véhicule automobile caractérisé en ce qu'il comporte un arbre mis en rotation par un moteur, un boîtier destiné à enfermer un système d'embiellage à engrenage, et un système d'embiellage selon la revendication 1.

D'autres caractéristiques et avantages de l'invention apparaîtront à la lecture de la description détaillée des figures qui suit, parmi lesquelles :
- la figure 1 est une vue en perspective d'un mécanisme d'embiellage à engrenage,
- la figure 2 est une vue en perspective d'un mécanisme d'embiellage selon l'invention,
- la figure 3 est une vue en coupe d'un système d'embiellage selon l'invention avec le boîtier le contenant,
- les figures 4 et 5 sont des vues latérales du système d'embiellage de la figure 2 à différents stades de son assemblage,
- la figure 6 est une vue en coupe d'un mode de réalisation alternatif de système d'embiellage.

Sur toutes les figures les mêmes références se rapportent aux mêmes éléments.

L'invention concerne un système d'embiellage, en particulier destiné à transmettre l'énergie motrice d'un moteur aux mécanismes des balais d'un dispositif essuie-glace de véhicule automobile dans un système d'essuie-glace.

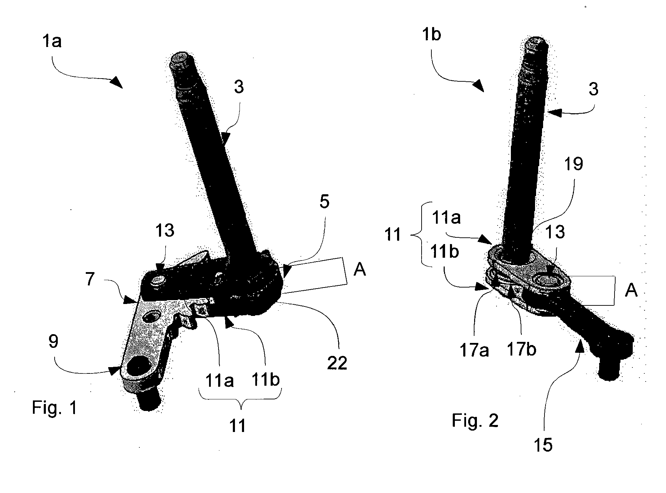

La figure 1 montre un système d'embiellage 1a à engrenages. Le système d'embiellage comporte en particulier un arbre 3, mis en rotation par un moteur (non-représenté), via un éventuel mécanisme de transmission. L'arbre 3 est solidairement lié à une première roue dentée 5, qui est elle-même en pris avec une portion dentée d'une seconde roue dentées 7 formant base d'un bras 9 qui est lui relié au mécanisme des balais du dispositif d'essuie-glace (non-représenté).

Les roues dentées 5, 7 sont maintenues à distance d'engagement mutuel par des demi-balanciers 11a, 11b, deux plaquettes métalliques allongées percées à leurs extrémités de trous laissant respectivement passer l'arbre 3 et un axe 13, auquel s'articule la seconde roue dentée 7 formant base du bras 9. Ledit axe 13 comporte un cylindre traversant les demi-balanciers 11a, 11b et la seconde roue dentée 7, en contact glissant avec les demi-balanciers 11a, 11b et serré avec la seconde roue dentée 7.

La superposition des deux demi-balanciers 11a, 11b et de l'une des roues dentées 7, 9 confère au mécanisme 1a une épaisseur caractéristique *A*, en particulier autour de l'arbre 3 où se trouve la roue dentée 5.

La figure 2 montre un mécanisme de système d'embiellage sans engrenage 1b.

Un tel mécanisme 1b est apparenté au système bielle-manivelle classique. Le mécanisme 1b sans engrenage comporte un arbre 3, solidement lié à un balancier 11 comportant deux demi-balanciers 11a, 11b. Les demi-balanciers 11a, 11b sont reliés par emboîtement serré à l'arbre 3. À l'autre extrémité du balancier, entre les deux demi-balanciers 11a, 11b est placé un axe 13, autour duquel s'articule une bielle 15.

La bielle 15 est destinée à être reliée au mécanisme de mise en mouvement des balais de l'essuie-glace (non représenté).

Autour de l'arbre 3 et entre les demi-balanciers 11 est disposée une entretoise 17. L'entretoise 17 joue un rôle d'espacement des demi-balanciers 11 autour de l'arbre 3, en ce qu'elle maintient l'épaisseur caractéristique autour de l'arbre à la valeur *A* correspondant à un mécanisme à engrenages 1a. L'entretoise 17 est ici composée de deux demi-entretoises 17a, 17b, respectivement portées par un des demi-balanciers 11a, 11b. Ces demi-entretoises 17a, 17b sont obtenues par emboutissage lors de l'élaboration des demi-balanciers 11a, 11b, en formant un col autour du perçage 19 destiné à accueillir l'arbre 3.

En particulier, ces cols formant les demi-entretoises 17a, 17b servent aussi à la fixation des demi-balanciers 11a, 11b en ce qu'ils sont montés à force sur un moletage de l'arbre 3.

Alternativement les cols formant demi-entretoises 17a, 17b peuvent être des pièces rapportées, éventuellement collées, soudées ou vissées sur les demi-balanciers 11a, 11b.

Avantageusement les demi-balanciers 11a, 11b peuvent présenter un axe de symétrie longitudinal, de sorte qu'ils sont identiques, ce qui permet de simplifier encore outre mesure la logistique et diminue le prix de revient de ces pièces par économie d'échelle, puisqu'un seul modèle de demi-balanciers 11a, 11b est utilisé.

Une autre alternative prévoit l'utilisation d'un seul col d'épaisseur double formant à lui seul l'entretoise 17.

De manière plus générale l'entretoise 17 ou les deux demi-entretoises 17a, 17b peuvent être obtenues à partir d'une pièce découpée identique, par emboutissage d'une partie de l'une au moins des deux pièces découpées.

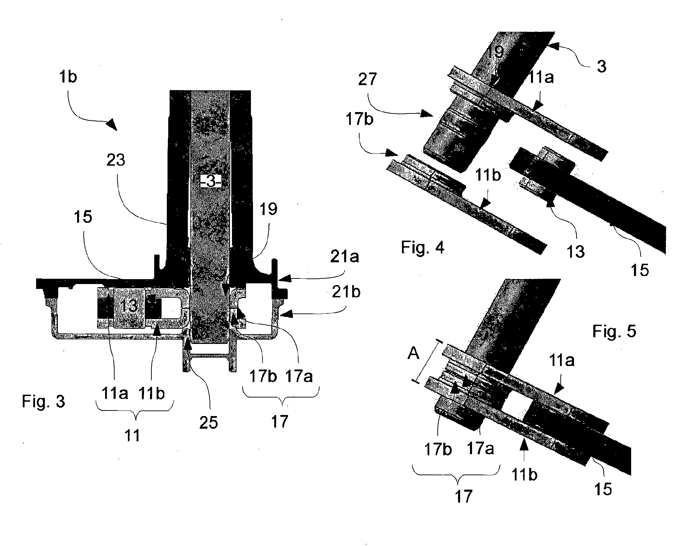

La figure 3 est une vue en coupe du système précédemment décrit intégré dans un boîtier 21. En particulier, ce boîtier comporte une plaque de fermeture 21a et un socle 21b. La plaque de fermeture 21b entoure la portion de l'arbre proche du balancier 11, et forme un couvercle s'étendant radialement à partir du demi-balancier supérieur 11a. Le socle 21b enserre la partie de l'arbre 3 dépassant du côté opposé à la plaque de fermeture 21a et forme un logement accueillant le balancier 11, l'axe 13 et une portion de la bielle 15.

Le boîtier 21 est de taille plus importante que le système qu'elle contient pour permettre le débattement du balancier 11 et de la bielle 15 lors du fonctionnement du système 1b. En particulier, les boîtiers représentés sur les figures sont initialement destinés à recevoir des systèmes d'embiellage à engrenages 1a.

Le boîtier 21 comporte aussi une ouverture, non visible du fait de la vue en coupe, par laquelle sort et rentre une partie de la bielle 15 lors du mouvement de translation de ladite bielle 15 engendré par le mouvement de rotation de l'arbre 3 lorsque le système 1b est utilisé.

On peut en particulier voir que les demi-balanciers 11a, 11b sont en appui contre le socle 21a et la plaque de fermeture 21b, en particulier autour de l'arbre 3.

Au niveau de l'appui, la plaque de fermeture 21a comporte une bague de renfort 23, en matériau plus dur pour éviter l'usure par friction localisée, par exemple du métal ou verre fritté pour un boîtier 21 en plastique. L'anneau de renfort 23 peut éventuellement comporter un roulement, et sert à guider en rotation l'arbre 3.

Au niveau du contact, la plaque de fermeture 21a comporte un palier 25, venant de matière avec elle, qui assure le maintien au cours de la rotation de l'embiellage 1 l'arbre 3 en position.

Ces éléments de renfort et soutien 23, 25 sont ajustés sur les mesures du système d'embiellage 1b. En particulier, on peut remarquer en figure 3 que la plaque de fermeture 21a et le palier 25 forment un palier glissant en appuyant axialement sur le balancier 11, en particulier autour de l'arbre 3, avec un contact glissant. Ce palier glissant permet de dissiper les efforts de torsion et cisaillement auxquels le mécanisme 1b peut être soumis.

Dans le cadre d'un système d'embiellage 1b selon l'invention, ceux-ci sont positionnés de manière à convenir à la fois à un système avec 1a et sans 1b engrenages. Ainsi, un même boîtier 21 convient pour les deux systèmes 1a, 1b.

Cette adaptation aux deux systèmes requiert une épaisseur *A* particulière au niveau des contacts autour de l'arbre 3. Cette épaisseur *A* n'est atteinte que grâce à l'entretoise 17.

Les figures 4 et 5 montrent le système 1b de la figure 2 en vue partielle, centrée sur l'extrémité de l'arbre 3 sur laquelle sont fixés les demi-balanciers 11a, 11b, respectivement avant et après fixation des demi-balanciers 11a, 11b.

Sur la figure 4, on peut voir une protubérance annulaire 27 sur l'arbre 3. Cette protubérance 27 peut présenter un moletage, et est destinée à être en prise avec les demi-balanciers 11a, 11b. En particulier, le moletage peut être placé et dimensionné de sorte à être en prise avec le ou les cols formant l'entretoise 17, plutôt qu'avec les demi-balanciers 11a, 11b mêmes.

L'axe 13 et la bielle 15 sont placés de sorte que les parties de l'axe 13 dépassant de part et d'autre de la bielle 15 sont en vis-à-vis de trous non visibles percés dans les demi-balanciers 11a, 11b. Ces trous ont un diamètre tel que l'axe 13 est, à l'état monté, glissant.

Sur la figure 5, les éléments sont en prise mutuelle, en particulier, le moletage de la protubérance 27 est en prise avec les deux trous dans les demi-balanciers 11a, 11b. L'axe 13 n'est plus visible en figure 5, car les parties dudit axe 13 dépassant de la bielle 15 sont intégralement recouvertes par les parties des demi-balanciers 11a, 11b formant les trous.

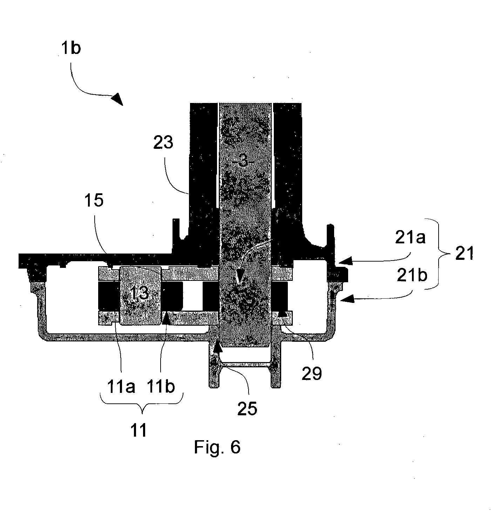

La figure 6 est un vue en coupe d'un mode de réalisation alternatif de l'entretoise 17 pour le système d'embiellage 1b sans engrenages. Dans ce mode de réalisation, l'entretoise 17 est composée d'un anneau 29, inséré entre les demi-balanciers 11a, 11b et entourant l'arbre 3.

L'anneau 29 peut être en métal ou en plastique, son épaisseur additionnée de l'épaisseur des demi-balanciers 11a, 11b donnant l'épaisseur *A* correspondant au système à engrenages 1a.

Dès lors, la protubérance 17 et le moletage sont d'épaisseur plus importante qu'en figure 4 et 5, de l'ordre de l'épaisseur finale désirée *A*, de sorte que ledit moletage est en prise avec les demi-balanciers 11a, 11b.

Un autre mode de réalisation non-représenté prévoit enfin de réaliser l'entretoise 17 ou au moins une des demi-entretoises 17a, 17b le cas échéant, sous forme de protubérance annulaire de l'arbre 3, l'entretoise venant alors au moins partiellement de matière avec ledit arbre 3.

L'invention permet ainsi d'obtenir un mécanisme d'embiellage sans engrenages 1b de dimensions lui permettant d'être intégré dans un boîtier pouvant alternativement accueillir un mécanisme avec engrenages 1a. Dès lors un même fournisseur peut proposer les deux mécanismes 1a, 1b intégrés dans un unique modèle de boîtier 21 commun, ce qui simplifie la logistique d'approvisionnement et permet de réaliser des économies d'échelle supplémentaires, ce qui finalement contribue à faire baisser le prix de revient du mécanisme d'embiellage 1a, 1b.

En outre, si les demi-balanciers 11a, 11b sont réalisés par emboutissage de formes découpées identiques, des économies supplémentaires peuvent être faites.

## Revendications

1. Système d'embiellage (1b) pour la transformation d'un mouvement rotatif d'un arbre (3) en mouvement de translation d'une bielle (15), comprenant un boîtier (21) destiné à enfermer un système d'embiellage à engrenage (1a), et un balancier (11) formé par deux demi-balanciers (11a, 11b) en prise avec l'arbre (3), un axe (13) au bout de balancier (11), la bielle (15) étant articulée à l'axe (13), **caractérisé en ce que** le balancier (11) comporte une entretoise (17) disposée entre les demi-balanciers (11a, 11b), l'écartement des demi-balanciers (11a, 11b) en appui contre l'entretoise (17) correspondant à l'épaisseur (*A*) du système d'embiellage à engrenages (1a) au moins autour de l'arbre (3) de sorte que ledit boîtier (21) forme un palier glissant par contact glissant pour chacun des deux demi-balanciers (11a, 11b) au moins autour de l'arbre (3).

2. Système d'embiellage selon la revendication 1, **caractérisé en ce que** l'entretoise (17) vient de matière avec au moins un des demi-balanciers (11a, 11b).

3. Système d'embiellage selon la revendication 2 **caractérisé en ce que** l'entretoise (17) est obtenue par emboutissage d'un col autour d'un perçage (19) d'un demi-balancier (11a, 11b) destiné à accueillir l'arbre (3).

4. Système d'embiellage selon l'une des revendications précédentes, **caractérisé en ce que** l'entretoise (17) comporte deux demi-entretoises (17a, 17b) identiques, respectivement portées par un des deux demi-balanciers (11a, 11b), lesdits demi-balanciers (11a, 11b) étant identiques.

5. Système d'embiellage selon la revendication 1, **caractérisé en ce que** l'entretoise comporte un anneau (29) entourant l'arbre (3) d'une épaisseur telle que ladite épaisseur additionnée de l'épaisseur des deux demi-balanciers est l'épaisseur (*A*) d'un système d'embiellage à engrenages (1a) au moins autour de l'arbre (3).

6. Système d'embiellage selon la revendication 5, **caractérisé en ce que** l'anneau (29) est un anneau métallique.

7. Système d'embiellage selon la revendication 5, **caractérisé en ce que** l'anneau (29) est un anneau en plastique.

8. Système d'embiellage selon la revendication 1, **caractérisé en ce que** l'entretoise (17) vient au moins partiellement de matière avec l'arbre (3).

9. Système d'essuie-glace de véhicule automobile **caractérisé en ce qu'**il comporte un arbre (3) mis en rotation par un moteur, un boîtier (21) destiné à enfermer un système d'embiellage à engrenage (1a), et un système d'embiellage (1b) selon la revendication 1 où la bielle (15) est raccordée à un mécanisme de balais.

## Patentansprüche

1. Gestängesystem (1b) für die Umformung einer Drehbewegung einer Welle (3) in eine Translationsbewegung einer Stange (15), umfassend ein Gehäuse (21), das dazu bestimmt ist, ein Gestängesystem mit Rädergetriebe (1a) zu enthalten, und einen Schwinghebel (11), der von zwei halben Schwinghebeln (11a, 11b), die mit der Welle (3) in Eingriff sind, gebildet ist, eine Achse (13) am Ende des Schwinghebels (11), wobei die Stange (15) an der Achse (13) angelenkt ist, **dadurch gekennzeichnet, dass** der Schwinghebel (11) eine Querstrebe (17) umfasst, die zwischen den halben Schwinghebeln (11a, 11b) angeordnet ist, wobei der Abstand der halben Schwinghebel (11a, 11b), die an der Querstrebe (17) abgestützt sind, der Dicke (A) des Gestängesystems mit Rädergetriebe (1a) zumindest um die Welle (3) entspricht, so dass das Gehäuse (21) ein Gleitlager durch Gleitkontakt für jeden der beiden halben Schwinghebel (11a, 11b) zumindest um die Welle (3) bildet.

2. Gestängesystem nach Anspruch 1, **dadurch gekennzeichnet, dass** die Querstrebe (17) mit mindestens einem der halben Schwinghebel (11a, 11b) aus einem Stück ist.

3. Gestängesystem nach Anspruch 2, **dadurch gekennzeichnet, dass** die Querstrebe (17) durch Aufstecken eines Halses um eine Bohrung (19) eines halben Schwinghebels (11a, 11b), die dazu bestimmt ist, die Welle (3) aufzunehmen, erhalten wird.

4. Gestängesystem nach einem der vorhergehenden Ansprüche, **dadurch gekennzeichnet, dass** die Querstrebe (17) zwei identische halbe Querstreben (17a, 17b) umfasst, die jeweils von einem der beiden halben Schwinghebel (11a, 11b) getragen werden, wobei die halben Schwinghebel (11a, 11b) identisch sind.

5. Gestängesystem nach Anspruch 1, **dadurch gekennzeichnet, dass** die Querstrebe einen Ring (29), der die Welle (3) umgibt, umfasst, der eine derartige Dicke hat, dass die Dicke, ergänzt durch die Dicke der beiden halben Schwinghebel, die Dicke (A) eines Gestängesystems mit Rädergetriebe (1a) zumindest um die Welle (3) ist.

6. Gestängesystem nach Anspruch 5, **dadurch gekennzeichnet, dass** der Ring (29) ein metallischer Ring ist.

7. Gestängesystem nach Anspruch 5, **dadurch gekennzeichnet, dass** der Ring (29) ein Kunststoffring ist.

8. Gestängesystem nach Anspruch 1, **dadurch gekennzeichnet, dass** die Querstrebe (17) zumindest teilweise mit der Welle (3) aus einem Stück ist.

9. Scheibenwischersystem eines Kraftfahrzeugs, **dadurch gekennzeichnet, dass** es eine Welle (3), die von einem Motor in Drehung versetzt wird, ein Gehäuse (21), das dazu bestimmt ist, ein Gestängesystem mit Rädergetriebe (1a) zu umfassen, und ein Gestängesystem (1b) nach den Ansprüchen umfasst.

## Claims

1. Linkage system (1b) for converting a rotary movement of a shaft (3) into a translational movement of a connecting rod (15), comprising a housing (21) intended to contain a geared linkage system (1a), and a crank (11) formed by two half-cranks (11a, 11b) in engagement with the shaft (3), a pivot (13) at the end of the crank (11), the connecting rod (15) being articulated to the pivot (13), **characterized in that** the crank (11) comprises a spacer piece (17) positioned between the half-cranks (11a, 11b), the spacing of the half-cranks (11a, 11b) when resting against the spacer piece (17) corresponding to the thickness (A) of the geared linkage system (1a) at least around the shaft (3) so that said housing (21) forms a sliding-contact sliding bearing for each of the two half-cranks (11a, 11b) at least around the shaft (3).

2. Linkage system according to Claim 1, **characterized in that** the spacer piece (17) is formed as an integral part of at least one of the half-cranks (11a, 11b).

3. Linkage system according to Claim 2, **characterized in that** the spacer piece (17) is obtained by pressing a collar around a drilling (19) of a half-crank (11a, 11b) intended to accept the shaft (3).

4. Linkage system according to one of the preceding claims, **characterized in that** the spacer piece (17) comprises two identical half-spacer-pieces (17a, 17b) borne respectively by one of the two half-cranks (11a, 11b), said half-cranks (11a, 11b) being identical.

5. Linkage system according to Claim 1, **characterized in that** the spacer piece comprises a ring (29) surrounding the shaft (3) and of a thickness such that said thickness combined with the thickness of the two half-cranks is the thickness (A) of a geared linkage system (1a) at least around the shaft (3).

6. Linkage system according to Claim 5, **characterized in that** the ring (29) is a metal ring.

7. Linkage system according to Claim 5, **characterized in that** the ring (29) is a plastic ring.

8. Linkage system according to Claim 1, **characterized in that** the spacer piece (17) is formed at least partially as an integral part of the shaft (3).

9. Motor vehicle wiper system, **characterized in that** it comprises a shaft (3) set in rotation by a motor, a housing (21) intended to contain a geared linkage system (1a), and a linkage system (1b) according to Claim 1, in which the rod (15) is connected to a wiper mechanism.
